# EUROPÄISCHE PATENTANMELDUNG

(11) **EP 4 224 371 A1**
(43) Veröffentlichungstag der Anmeldung: **09.08.2023**
(21) Anmeldenummer: 22155036.1
(22) Anmeldetag: 03.02.2022
(51) Int. Cl.: G06N 3/04, G06N 3/08, G06N 20/00, G06F 21/16

(54) **VERFAHREN ZUM DIEBSTAHLSCHUTZ VON MASCHINENLERNMODULEN SOWIE SCHUTZSYSTEM**

(71) Anmelder: Siemens Aktiengesellschaft, 80333 München (DE)
(72) Erfinder: Tokic, Michel, 88069 Tettnang (DE); von Beuningen, Anja, 99085 Erfurt (DE); Scharinger, Boris, 90762 Fürth (DE)
(74) Vertreter: Siemens Patent Attorneys

(57) **Zusammenfassung**

Erfindungsgemäß wird zum Diebstahlschutz eines zur Prädiktion von Sensorsignalen vorgesehenen Maschinenlernmoduls (NN) dieses darauf trainiert, anhand einer Zeitreihe eines Sensorsignals (SS) einen späteren Signalwert (SS(T+1)) des Sensorsignals (SS) als erstes Ausgabesignal (SSP) zu prädizieren sowie eine Streubreite des prädizierten späteren Signalwerts (SS(T+1)) als zweites Ausgabesignal (VAR) auszugeben. Weiterhin wird das Maschinenlernmodul (NN) um ein Prüfmodul (CK) erweitert, und das erweiterte Maschinenlernmodul (NN) wird zu einem Anwender übermittelt. Bei einer Einspeisung eines Eingabesignals (IS, SS1, SCS) in das übermittelte Maschinenlernmodul (NN) werden aus dem Eingabesignal (IS, SS1, SCS) ein erstes Ausgabesignal (SSP) und ein zweites Ausgabesignal (VAR) abgeleitet. Erfindungsgemäß wird dann durch das Prüfmodul (CK) geprüft, ob ein späterer Signalwert (IS(T+1)) des Eingabesignals (IS, SS1, SCS) außerhalb einer durch das zweite Ausgabesignal (VAR) angegebenen Streubreite um einen durch das erste Ausgabesignal (SSP) angegebenen Signalwert liegt. Schließlich wird abhängig vom Prüfungsergebnis, insbesondere bei einem oder mehreren außerhalb der Streubreite liegenden späteren Signalwerten (IS(T+1)) ein Alarmsignal (A) ausgegeben.

## Beschreibung

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahlerkennung von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt. Derartige Verfahren bieten allerdings nur wenig Schutz gegen eine sogenannte Modellextraktion, bei der ein ggf. markiertes neuronales Netz dazu verwendet wird, ein neues Maschinenlernmodul darauf zu trainieren, sich ähnlich wie das neuronale Netz zu verhalten. Ein, neuronalen Gewichten aufgeprägtes Wasserzeichen ist hierbei im neu trainierten Maschinenlernmodul in der Regel nicht mehr sicher nachweisbar.

Im Internet-Dokument https://www.internet-sicherheit.de/research/cybersicherheit-und-kuenstlicheintelligenz/model-extraction-attack.html (abgerufen am 16.12. 2021) werden mehrere Verfahren zum Schutz vor Modellextraktion sowie deren Probleme diskutiert.

Es ist Aufgabe der vorliegenden Erfindung, ein Verfahren zum Diebstahlschutz eines Maschinenlernmoduls sowie ein entsprechendes Schutzsystem anzugeben, die einen besseren Schutz vor Modelextraktion bieten.

Gelöst wird diese Aufgabe durch ein Verfahren mit den Merkmalen des Patentanspruchs 1, durch ein Schutzsystem mit den Merkmalen des Patentanspruchs 8, durch ein Computerprogrammprodukt mit den Merkmalen des Patentanspruchs 9 sowie durch ein computerlesbares Speichermedium mit den Merkmalen des Patentanspruches 10.

Erfindungsgemäß wird zum Diebstahlschutz eines zur Prädiktion von Sensorsignalen vorgesehenen Maschinenlernmoduls dieses darauf trainiert, anhand einer Zeitreihe eines Sensorsignals einen späteren Signalwert des Sensorsignals als erstes Ausgabesignal zu prädizieren sowie eine Streubreite des prädizierten späteren Signalwerts als zweites Ausgabesignal auszugeben. Weiterhin wird das Maschinenlernmodul um ein Prüfmodul erweitert, und das erweiterte Maschinenlernmodul wird zu einem Anwender übermittelt. Bei einer Einspeisung eines Eingabesignals in das übermittelte Maschinenlernmodul werden aus dem Eingabesignal ein erstes Ausgabesignal und ein zweites Ausgabesignal abgeleitet. Erfindungsgemäß wird dann durch das Prüfmodul geprüft, ob ein späterer Signalwert des Eingabesignals außerhalb einer durch das zweite Ausgabesignal angegebenen Streubreite um einen durch das erste Ausgabesignal angegebenen Signalwert liegt. Schließlich wird abhängig vom Prüfungsergebnis, insbesondere bei einem oder mehreren außerhalb der Streubreite liegenden späteren Signalwerten ein Alarmsignal ausgegeben.

Zur Durchführung des erfindungsgemäßen Verfahrens sind ein Schutzsystem, ein Computerprogrammprodukt sowie ein computerlesbares, vorzugsweise nichtflüchtiges Speichermedium vorgesehen.

Das erfindungsgemäße Verfahren sowie das erfindungsgemäße Schutzsystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Die Erfindung bietet in vielen Fällen einen effizienten und verhältnismäßig sicheren Schutz von Maschinenlernmodulen gegen eine unberechtigte Modellextraktion. Das Verfahren basiert auf der Beobachtung, dass beim Versuch einer Modellextraktion in der Regel ein Darstellungsraum der Eingabesignale des Maschinenlernmoduls systematisch und/oder zufallsbasiert abgetastet wird. Die solcherart abtastenden Eingabesignale weisen aber in der Regel keine oder eine andere zeitliche Abhängigkeit auf als die zum Training benutzten Sensorsignale. Damit kann es als Hinweis auf eine Modellextraktion gewertet werden, wenn die Vorhersagen des trainierten Maschinenlernmoduls nicht mit einem zeitlichen Verlauf der Eingabesignale kompatibel sind. Darüber hinaus ist die Erfindung flexibel anwendbar und insbesondere nicht auf künstliche neuronale Netze beschränkt.

Vorteilhafte Ausführungsformen und Weiterbildungen der Erfindung sind in den abhängigen Ansprüchen angegeben.

Nach einer vorteilhaften Ausführungsform der Erfindung kann das Maschinenlernmodul darauf trainiert werden, durch die als zweites Ausgabesignal ausgegebene Streubreite eine tatsächliche Streubreite des tatsächlichen späteren Signalwerts des Sensorsignals zu reproduzieren.

Zu diesem Zweck kann beim Training insbesondere eine log-likelihood-Fehlerfunktion der Streubreite als Kostenfunktion oder Belohnungsfunktion verwendet werden. Eine solche log-likelihood-Fehlerfunktion wird häufig auch als logarithmische Plausibilitätsfunktion bezeichnet. Mittels der log-likelihood-Fehlerfunktion kann ein Abstand der als zweites Ausgabesignal ausgegebenen Streubreite von einer tatsächlichen Streubreite abgeschätzt werden. Damit können zu trainierende Parameter, z.B. neuronale Gewichte des Maschinenlernmoduls dahingehend optimiert werden, dass der Abstand minimiert oder zumindest verringert wird.

Alternativ oder zusätzlich kann das Maschinenlernmodul ein bayessches neuronales Netz umfassen, dass darauf trainiert wird, die tatsächliche Streubreite des tatsächlichen späteren Signalwerts des Sensorsignals zu reproduzieren. Zum Training eines bayessches neuronalen Netzes stehen effiziente numerische Verfahren zur Verfügung, die das bayessche neuronale Netz dazu befähigen, Vorhersagen zusammen mit ihren Streubreiten aus den Eingabesignalen abzuleiten. Einschlägige Trainingsverfahren sind beispielsweise in der Publikation "Pattern Recognition and Machine Learning" by Christopher M. Bishop, Springer 2011, beschrieben.

Nach einer vorteilhaften Weiterbildung der Erfindung kann ein Steuerungsagent zum Steuern einer Maschine bereitgestellt werden, der anhand eines Sensorsignals der Maschine ein Steuersignal zum Steuern der Maschine erzeugt. Das vom Steuerungsagenten anhand des Sensorsignals der Maschine erzeugte Steuersignal kann dann beim Training des Maschinenlernmoduls berücksichtigt werden. Weiterhin können das Eingabesignal in den Steuerungsagenten und das vom Steuerungsagenten anhand des Eingabesignals erzeugte Steuersignal in das übermittelte Maschinenlernmodul eingespeist werden. Das erste Ausgabesignal und das zweite Ausgabesignal des übermittelten Maschinenlernmoduls können dann abhängig vom Steuersignal erzeugt werden. Auf diese Weise können Steueraktionen des Steuerungsagenten in die Prädiktion von Sensorsignalen und deren Streubreiten sowohl beim Training als auch bei der Auswertung des Maschinenlernmoduls einbezogen werden. Als Steuerungsagent kann vorzugsweise ein lernbasierter Steuerungsagent verwendet werden, der insbesondere mittels eines Verfahrens des bestärkenden Lernens darauf trainiert wird, anhand eines Sensorsignals der Maschine ein optimiertes Steuersignal zu erzeugen.

Nach einer weiteren vorteilhaften Ausführungsform der Erfindung kann die Prüfung durch das Prüfmodul für eine Vielzahl von späteren Signalwerten des Eingabesignals durchgeführt werden. Dabei kann eine Anzahl und/oder ein Anteil von außerhalb der durch das zweite Ausgabesignal jeweils angegebenen Streubreite liegenden späteren Signalwerten ermittelt werden. Das Alarmsignal kann dann abhängig von der ermittelten Anzahl und/oder dem ermittelten Anteil ausgegeben werden. Alternativ oder zusätzlich kann für einen jeweiligen späteren Signalwert des Eingabesignals ermittelt werden, um welchen Überschreitungsfaktor dessen Abstand vom durch das erste Ausgabesignal angegebenen Signalwert die durch das zweite Ausgabesignal angegebene Streubreite überschreitet. Das Alarmsignal kann dann abhängig von einem oder mehreren der ermittelten Überschreitungsfaktoren ausgegeben werden. Insbesondere kann das Alarmsignal ausgegeben werden, falls die Anzahl, der Anteil und/oder ein oder mehrere der Überschreitungsfaktoren einen jeweils vorgegebenen Schwellwert überschreiten.

Nach einer weiteren vorteilhaften Ausführungsform der Erfindung können das Maschinenlernmodul, das Prüfmodul und gegebenenfalls ein Steuerungsagent in einem Softwarecontainer, insbesondere in einem schlüssel- oder signaturgeschützten Softwarecontainer gekapselt werden. Der Softwarecontainer kann vorzugsweise so ausgestaltet sein, dass das Maschinenlernmodul, das Prüfmodul und/oder gegebenenfalls der Steuerungsagent bei einer Auftrennung des Softwarecontainers ihre Funktion verlieren.

Ein Ausführungsbeispiel der Erfindung wird nachfolgend anhand der Zeichnung näher erläutert. Dabei veranschaulichen jeweils in schematischer Darstellung
- Figur 1: eine Steuerung eines technischen Systems mittels einer lernbasierten Steuereinrichtung,
- Figur 2: ein erfindungsgemäßes Schutzsystem für Maschinenlernmodule und
- Figur 3: einen Betrieb eines erfindungsgemäß geschützten Maschinelernmoduls.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

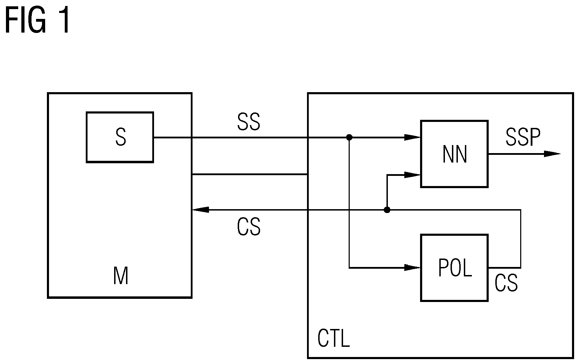

Figur 1 veranschaulicht eine Steuerung eines technischen Systems M mittels einer lernbasierten Steuereinrichtung CTL in schematischer Darstellung. Das technische System M kann hierbei insbesondere eine Maschine, ein Roboter, ein Motor, eine Fertigungsanlage, eine Werkzeugmaschine, ein Verkehrsleitsystem, eine Turbine, eine Verbrennungskraftmaschine und/oder ein Kraftfahrzeug sein oder ein solches System umfassen.

Die Steuereinrichtung CTL kann insbesondere zur Vorhersage von wahrscheinlichen Fehlfunktionen oder Ausfällen des technischen Systems M und/oder zur Vorhersage von Luftqualitätswerten vorgesehen sein.

Für das vorliegende Ausführungsbeispiel sei angenommen, dass das technische System M eine Maschine, z.B. ein Fertigungsroboter ist. Entsprechend ist die Steuereinrichtung CTL als Maschinensteuerung ausgebildet.

Die Maschinensteuerung CTL ist an die Maschine M gekoppelt. In Figur 1 ist die Maschinensteuerung CTL extern zur Maschine M dargestellt. Alternativ dazu kann die Maschinensteuerung CTL aber auch ganz oder teilweise in die Maschine M integriert sein.

Die Maschine M weist eine Sensorik S auf, durch die fortlaufend Betriebsparameter der Maschine M sowie andere Messwerte, z.B. aus einer Umgebung der Maschine M gemessen werden. Die von der Sensorik S ermittelten Messwerte werden in Form von zeitlich aufgelösten Sensorsignalen SS von der Maschine M zur Maschinensteuerung CTL übermittelt.

Durch die Sensorsignale SS wird ein Betriebszustand der Maschine M oder ein Betriebszustand von einer oder mehreren ihrer Komponenten im Zeitverlauf quantifiziert. Insbesondere können durch die Sensorsignale SS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Sensorsignale SS jeweils durch eine Zeitreihe von Signalwerten oder durch eine Zeitreihe von numerischen Datenvektoren dargestellt und in dieser Form zur Maschinensteuerung CTL übermittelt.

Aus Übersichtlichkeitsgründen wird im Folgenden nur ein einzelnes Sensorsignal SS betrachtet, das aber stellvertretend auch den Fall mehrerer Sensorsignale SS umfassen soll.

Die Maschinensteuerung CTL verfügt über einen lernbasierten Steuerungsagenten POL zum Steuern der Maschine M. Der Steuerungsagent POL ist darauf trainiert, anhand eines Sensorsignals SS der Maschine M ein optimiertes Steuersignal CS zum Steuern der Maschine M auszugeben. Das Steuersignal CS ist dahingehend optimiert, dass die Maschine M in dem durch das eingespeiste Sensorsignal SS spezifizierten Betriebszustand in optimierter Weise gesteuert wird. Ein solcher Steuerungsagent POL wird häufig auch als Policy bezeichnet. Zu seinem Training steht eine Vielzahl effizienter Verfahren des maschinellen Lernens zur Verfügung, insbesondere Verfahren des bestärkenden Lernens, das häufig auch als Reinforcement-Learning bezeichnet wird.

Die Maschinensteuerung CTL verfügt weiterhin über ein Maschinenlernmodul NN zur Prädiktion des Sensorsignals SS. Das Maschinelernmodul NN ist darauf trainiert, anhand von bis zu einem Zeitpunkt T vorliegenden Signalwerten des Sensorsignals SS sowie anhand des vom Steuerungsagenten POL ausgegebenen Steuersignals CS mindestens einen Signalwert SSP des Sensorsignals SS für mindestens einen nach dem Zeitpunkt T liegenden Zeitpunkt vorherzusagen. Auf das Training des Maschinenlernmoduls NN wird unten noch näher eingegangen.

Das Maschinenlernmodul NN und/oder der Steuerungsagent POL können insbesondere als künstliche neuronale Netze implementiert werden. Alternativ oder zusätzlich können das Maschinenlernmodul NN und/oder der Steuerungsagent POL ein rekurrentes neuronales Netz, ein faltendes neuronales Netz, ein Perzeptron, ein bayessches neuronales Netz, einen Autoencoder, einen variationalen Autoencoder, einen Gaußprozess, eine Deep-Learning-Architektur, eine Support-Vektor-Maschine, ein datengetriebenes Regressionsmodell, einen k-nächste-Nachbarn-Klassifikator, ein physikalisches Modell und/oder einen Entscheidungsbaum umfassen.

Zum Steuern der Maschine M wird deren Sensorsignal SS als Eingabesignal in eine Eingabeschicht des trainierten Steuerungsagenten POL sowie in eine Eingabeschicht des trainierten Maschinenlernmoduls NN eingespeist. Anhand des Sensorsignals SS erzeugt der Steuerungsagent POL das Steuersignal CS als Ausgabesignal. Das Steuersignal CS oder ein daraus abgeleitetes Signal wird schließlich zur Maschine M übermittelt, um diese in optimierter Weise zu steuern.

Ferner wird das Steuersignal CS in das Maschinenlernmodul NN als weiteres Eingabesignal eingespeist. Aus dem Sensorsignal SS und dem Steuersignal CS leitet das Maschinenlernmodul NN mindestens einen zukünftigen Signalwert SSP des Sensorsignals SS ab. Der mindestens eine zukünftige Signalwert SSP kann gegebenenfalls in den Steuerungsagenten POL eingespeist werden, um damit ein vorausschauend optimiertes Steuersignal CS zu erzeugen. Darüber hinaus wird der mindestes eine spätere Signalwert SSP aber - wie untern näher erläutert - erfindungsgemäß dazu verwendet, eine Modellextraktion zu detektieren.

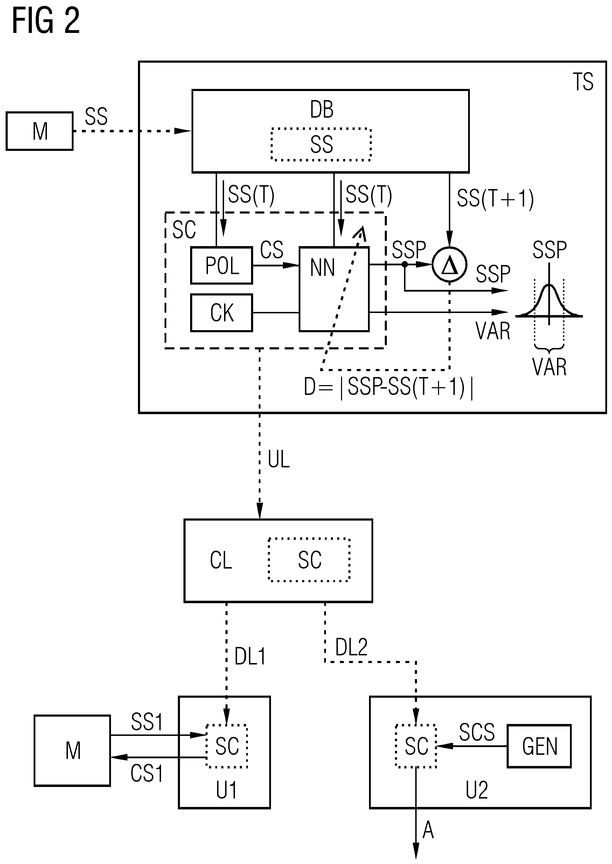

Figur 2 veranschaulicht ein erfindungsgemäßes Schutzsystem für Maschinenlernmodule. Im vorliegenden Ausführungsbeispiel soll neben dem Maschinenlernmodul NN auch der lernbasierte Steuerungsagent POL als weiteres Maschinenlernmodul durch das Schutzsystem geschützt werden.

Es sei vorausgesetzt, dass der zu schützende Steuerungsagent POL bereits, wie oben beschrieben, durch ein Verfahren des Reinforcement-Learning darauf trainiert wurde, anhand eines Sensorsignals SS der Maschine M ein Steuersignal CS auszugeben, mittels dessen die Maschine M in optimierter Weise gesteuert werden kann. Anstelle oder zusätzlich zum lernbasierten Steuerungsagenten POL kann auch ein regelbasierter Steuerungsagent vorgesehen sein. Der Steuerungsagent POL ist mit dem Maschinenlernmodul NN gekoppelt.

Das zu schützende Maschinenlernmodul NN wird in einem Trainingssystem TS darauf trainiert, anhand einer Zeitreihe des Sensorsignals SS der Maschine M sowohl einen späteren Signalwert des Sensorsignals SS als erstes Ausgabesignal SSP zu prädizieren als auch eine Streubreite des prädizierten späteren Signalwerts als zweites Ausgabesignal VAR auszugeben.

Das Training wird anhand einer großen Menge von Zeitreihen des Sensorsignals SS ausgeführt, die als Trainingsdaten fungieren. Die Trainingsdaten stammen von der zu steuernden Maschine M, von einer dazu ähnlichen Maschine und/oder von einer Simulation der Maschine M. Im vorliegenden Ausführungsbeispiel stammen die Trainingsdaten von der Maschine M und sind in einer Datenbank DB des Trainingssystems TS gespeichert.

Die Signalwerte einer Zeitreihe des Sensorsignals SS bis zu einem jeweiligen Zeitpunkt T werden im Folgenden als SS(T) bezeichnet. Entsprechend wird ein Signalwert dieser Zeitreihe zu einem gegenüber dem jeweiligen Zeitpunkt T späteren Zeitpunkt T+1 als SS(T+1) notiert. Die Bezeichnung T+1 steht hierbei nicht nur für einen in der Zeitreihe unmittelbar auf den Zeitpunkt T folgenden Zeitpunkt, sondern kann auch einen beliebigen gegenüber T späteren Zeitpunkt bezeichnen.

Unter einem Training sei allgemein eine Optimierung einer Abbildung eines Eingabesignals eines Maschinenlernmoduls auf dessen Ausgabesignal verstanden. Diese Abbildung wird nach vorgegebenen Kriterien während einer Trainingsphase optimiert. Als Kriterium können insbesondere bei Prädiktionsmodellen wie dem Maschinenlernmodul NN ein Prädiktionsfehler und bei Steuermodellen wie dem lernbasierten Steuerungsagenten POL ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, k-nächste-Nachbarn-Klassifikatoren, physikalische Modelle und/oder Entscheidungsbäume.

Zum Training des Maschinenlernmoduls NN werden die in den Trainingsdaten enthaltenen Zeitreihen des Sensorsignals SS dem Maschinenlernmodul NN sowie dem Steuerungsagenten POL als Eingabesignale zugeführt. Dabei erzeugt der Steuerungsagent POL anhand der bis zu einem jeweiligen Zeitpunkt T vorliegenden Signalwerte SS(T) - wie oben beschrieben - ein Steuersignal CS. Das Steuersignal CS wird vom Steuerungsagenten POL in das Maschinenlernmodul NN als zusätzliches Eingabesignal eingespeist.

Aus den bis zu einem jeweiligen Zeitpunkt T vorliegenden Signalwerten SS(T) und dem Steuersignal CS erzeugt das Maschinenlernmodul NN ein erstes Ausgabesignal SSP sowie ein zweites Ausgabesignal VAR. Im Zuge des Trainings werden dann neuronale Gewichte oder andere Parameter des Maschinenlernmoduls NN vorzugsweise durch eines der oben erwähnten Optimierungsverfahren derart eingestellt, dass ein jeweiliger späterer Signalwert SS(T+1) des Sensorsignals SS durch das erste Ausgabesignal SSP und eine statistische Streubreite des ersten Ausgabesignals SSP durch das zweite Ausgabesignal VAR möglichst genau reproduziert werden.

Zu diesem Zweck wird im vorliegenden Ausführungsbeispiel das erste Ausgabesignal SSP mit dem jeweiligen späteren Signalwert SS(T+1) verglichen, und es wird ein jeweiliger Abstand D zwischen diesen Signalen ermittelt. Als Abstand D kann beispielsweise ein euklidischer Abstand zwischen den jeweils darstellenden Datenvektoren oder eine andere Norm von deren Differenz ermittelt werden, z.B. gemäß D = |SSP-SS(T+1)| oder D = (SSP-SS(T+1))2.

Weiterhin wird das zweite Ausgabesignal VAR mit einer statistischen Streubreite des ersten Ausgabesignals SSP und/oder des jeweiligen späteren Signalwerts SS(T+1) verglichen. Die Streubreite kann dabei insbesondere durch eine statistische Streuung, eine statistische Varianz oder eine Wahrscheinlichkeitsverteilung dargestellt werden. Der Vergleich wird vorzugsweise mittels einer negativen log-likelihood-Fehlerfunktion ausgeführt, die als Kostenfunktion zusammen mit dem Abstand D zum Training des Maschinenlernmoduls NN verwendet wird.

Hierzu werden die ermittelten Abstände D sowie die Werte der Kostenfunktion zum Maschinenlernmodul NN zurückgeführt. Dessen neuronale Gewichte werden dann so eingestellt, dass der Abstand D sowie die Kostenfunktion, z.B. als gewichtete Kombination, zumindest im statistischen Mittel minimiert werden.

Durch das Training wird das Maschinenlernmodul NN dazu befähigt, einen jeweils zukünftigen Signalwert, hier SS(T+1) des Sensorsignals SS sowie dessen jeweilige Streubreite vorherzusagen. Das erste Ausgabesignal SSP stellt somit einen jeweiligen prädizierten Signalwert des Sensorsignals SS und das zweite Ausgabesignal VAR dessen jeweilige Streubreite dar.

Alternativ oder zusätzlich kann das Maschinenlernmodul NN auch ein bayessches neuronales Netz umfassen. Ein bayessches neuronales Netz kann als statistischer Schätzer verwendet werden, der in paralleler und intrinsischer Weise zu einem jeweiligen prädizierten Signalwert dessen Streubreite ermittelt. Implementierungsvarianten derartiger bayesscher neuronaler Netze können beispielsweise der oben erwähnten Publikation "Pattern Recognition and Machine Learning" by Christopher M. Bishop, Springer 2011, entnommen werden.

Anhand der durch das Maschinenlernmodul NN prädizierten Signalwerte SSP und Streubreiten VAR soll bei einer späteren Verwendung des Maschinenlernmoduls NN oder des Steuerungsagenten POL geprüft werden, ob die dem Maschinenlernmodul NN zugeführten Eingabesignale ähnliche zeitliche Abhängigkeiten aufweisen wie das Sensorsignal SS. Bei ähnlichen zeitlichen Abhängigkeiten ist zu erwarten, dass die Vorhersagen des Maschinenlernmoduls NN nicht in hinsichtlich der jeweiligen Streubreite signifikanter Weise von den tatsächlichen späteren Signalwerten der Eingabesignale abweichen.

Ähnliche zeitliche Abhängigkeiten der Eingabesignale sprechen für einen bestimmungsgemäßen Betrieb des Maschinenlernmoduls NN bzw. des Steuerungsagenten POL. Dagegen ist eine signifikante Abweichung der zeitlichen Abhängigkeiten ein Hinweis auf eine systematische oder zufallsgesteuerte Abtastung des Maschinenlernmoduls NN bzw. des Steuerungsagenten POL und damit ein starkes Indiz für den Versuch einer Modellextraktion.

Nach dem Training wird das Maschinenlernmodul NN durch das Trainingssystem TS um ein Prüfmodul CK erweitert. Das Prüfmodul CK wird dabei mit dem Maschinenlernmodul gekoppelt. Um die Schnittstellen des Maschinenlernmoduls zum Prüfmodul CK sowie zum Steuerungsagenten POL gegen unberechtigten Zugriff zu schützen, wird das trainierte Maschinenlernmodul NN zusammen mit dem Prüfmodul CK und dem Steuerungsagenten POL durch das Trainingssystem TS in einem Softwarecontainer SC gekapselt. Die Kapselung erfolgt vorzugsweise schlüssel- und/oder signaturgeschützt. Die gekapselten Schnittstellen können hierbei z.B. durch Verschlüsselung oder Obfuskation geschützt werden. Der Softwarecontainer SC ist vorzugsweise so ausgestaltet, dass das Maschinenlernmodul NN, der Steuerungsagent POL und/oder das Prüfmodul CK bei einer Auftrennung des Softwarecontainers SC ihre Funktionen verlieren.

Der so geschützte Softwarecontainer SC kann dann an Anwender weitergegeben werden. Zu diesem Zweck wird der Softwarecontainer SC vom Trainingssystem TS durch einen Upload UL in eine Cloud CL, insbesondere in einen App-Store der Cloud CL übertragen.

Aus der Cloud CL oder ihrem App-Store wird der Softwarecontainer SC im vorliegenden Ausführungsbeispiel einerseits durch einen ersten Download DL1 zu einem System U1 eines ersten Anwenders und andererseits durch einen zweiten Download DL2 zu einem System U2 eines zweiten Anwenders heruntergeladen.

Für das vorliegende Ausführungsbeispiel sei angenommen, dass der erste Anwender mit Hilfe des geschützten Steuerungsagenten POL sowie des Maschinenlernmoduls NN auf seinem System U1 die Maschine M bestimmungsgemäß steuern möchte. Demgegenüber möchte der zweite Anwender auf seinem System U2 an dem trainierten Steuerungsagenten POL und/oder an dem trainierten Maschinenlernmodul NN eine unberechtigte Modellextraktion vornehmen.

Durch das System U1 wird zum Steuern der Maschine M ein Sensorsignal SS1 der Maschine M empfangen und als Eingabesignal in den Softwarecontainer SC eingespeist. Im Softwarecontainer SC wird durch das Prüfmodul CK geprüft, ob die Vorhersagen des Maschinenlernmoduls NN in hinsichtlich der jeweiligen Streubreite signifikanter Weise von den tatsächlichen späteren Signalwerten des Eingabesignals SS1 abweichen. Ein Ablauf der Prüfung wird unten näher erläutert.

Insofern im vorliegenden Ausführungsbeispiel das Sensorsignal SS1 ebenso wie das zum Training benutzte Sensorsignal SS von der Maschine M stammen, ist zu erwarten, dass die Sensorsignale SS1 und SS ähnliche zeitliche Abhängigkeiten aufweisen. Dementsprechend wird durch das Prüfmodul CK im System U1 keine signifikante Abweichung der Vorhersagen des Maschinenlernmoduls NN detektiert, was für einen bestimmungsgemäßen Normalbetrieb des Maschinenlernmoduls NN sowie des Steuerungsagenten POL spricht. Infolgedessen kann die Maschine M durch ein Steuersignal CS1 des trainierten Steuerungsagenten POL, wie vom ersten Anwender gewünscht, gesteuert werden.

Anders als im Fall des ersten Anwenders wird im System U2 des zweiten Anwenders durch einen Generator GEN ein synthetisches Abtastsignal SCS als Eingabesignal für den Softwarecontainer SC generiert, um das Maschinenlernmodul und/oder des Steuerungsagenten POL systematisch abzutasten. Das dem Softwarecontainer SC zugeführte Eingabesignal SCS wird, wie oben bereits beschrieben, durch das Prüfmodul CK daraufhin geprüft, ob die Vorhersagen des Maschinenlernmoduls NN signifikant von den tatsächlichen späteren Signalwerten des Eingabesignals SCS abweichen.

Insofern derartige Abtastsignale in der Regel nicht die gleichen zeitlichen Abhängigkeiten aufweisen wie das zum Training benutzte Sensorsignal SS, kann davon ausgegangen werden, dass ein statistisch signifikanter Anteil der späteren Signalwerte des Abtastsignals SS außerhalb der jeweiligen Streubreite um einen jeweiligen Vorhersagewert des Maschinenlernmoduls NN liegen. Dies wird im vorliegenden Ausführungsbeispiel durch das Prüfmodul CK erkannt und als Hinweis auf eine unberechtigte Modellextraktion bewertet. Infolgedessen wird durch das Prüfmodul CK ein Alarmsignal A beispielsweise an einen Ersteller des trainierten Maschinenlernmoduls NN und/oder des Steuerungsagenten POL übermittelt. Durch das Alarmsignal A kann der Ersteller des trainierten Maschinenlernmoduls NN und/oder des Steuerungsagenten POL über den Versuch einer Modellextraktion informiert werden.

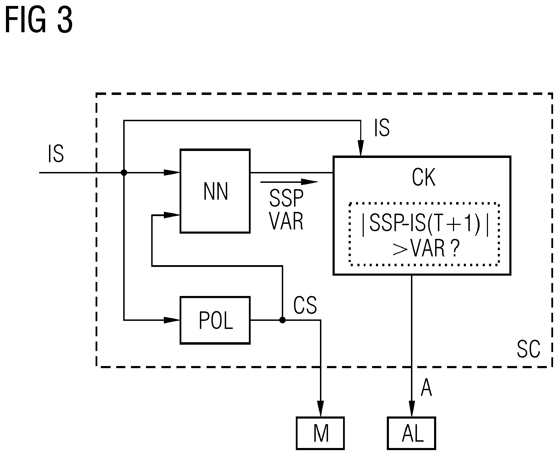

Figur 3 veranschaulicht einen Betrieb eines erfindungsgemäß geschützten Maschinenlernmoduls NN bzw. eines Steuerungsagenten POL. Das Maschinenlernmodul NN sowie der Steuerungsagent POL sind, wie oben schon erwähnt, zusammen mit dem Prüfmodul CK in einem Softwarecontainer SC gekapselt. Das Maschinenlernmodul NN ist dabei mit dem Steuerungsagenten POL sowie mit dem Prüfmodul CK über gegen unberechtigten Zugriff geschützte Schnittstellen gekoppelt.

Im Betrieb wird dem Softwarecontainer SC gemäß dem vorliegenden Ausführungsbeispiel entweder ein Sensorsignal SS1 der Maschine M oder ein synthetisches Abtastsignal SCS als Eingabesignal IS zugeführt. Wie oben erwähnt, sei hierbei angenommen, dass das Sensorsignal SS1 im Rahmen einer bestimmungsgemäßen Verwendung des Softwarecontainers SC zugeführt wird, während das Abtastsignal SCS im Falle einer versuchten Modellextraktion eingespeist wird.

Das Eingabesignal IS wird in das Maschinenlernmodul NN, in den Steuerungsagenten POL sowie in das Prüfmodul CK eingespeist. Anhand des Eingabesignals IS erzeugt der Steuerungsagent POL, wie oben ausgeführt, ein Steuersignal CS, das wiederum in das Maschinenlernmodul NN als zusätzliches Eingabesignal eingespeist wird. Aus dem Steuersignal CS und dem Eingabesignal IS leitet das Maschinenlernmodul NN, wie oben beschrieben, ein erstes Ausgabesignal SSP sowie ein zweites Ausgabesignal VAR ab und übermittelt die Ausgabesignale SSP und VAR zum Prüfmodul CK.

Anhand der Ausgabesignale SSP und VAR sowie anhand von bis zu einem jeweiligen Zeitpunkt T vorliegenden Signalwerten IS(T) des Eingabesignals IS prüft das Prüfmodul CK, ob ein jeweiliger späterer Signalwert IS(T+1) des Eingabesignals IS in signifikanter Weise von den Vorhersagen des Maschinenlernmoduls NN abweicht.

Zu diesem Zweck ermittelt das Prüfmodul CK einen Abstand zwischen einem jeweiligen durch das erste Ausgabesignal SSP angegebenen prädizierten Signalwert und einem jeweiligen späteren Signalwert IS(T+1). Dieser jeweilige Abstand wird mit einer jeweiligen durch das zweite Ausgabesignal VAR angegebenen Streubreite verglichen. Übersteigt dabei ein jeweiliger Abstand eine jeweilige Streubreite, wird dies durch das Prüfmodul CK als Abweichung von der Vorhersage des Maschinenlernmoduls NN bewertet. Sofern schließlich ein statistisch signifikanter Anteil oder eine statistische signifikante Anzahl der späteren Signalwerte IS(T+1) von den Vorhersagen des Maschinenlernmoduls NN abweichen, wird dies als Hinweis auf eine unberechtigte Modellextraktion gewertet. In diesem Fall wird durch das Prüfmodul CK eine Alarmsignal A erzeugt. Andernfalls wird durch das Prüfmodul CK ein bestimmungsgemäßer Normalbetrieb diagnostiziert.

Wie oben bereits erwähnt, ist zu erwarten, dass das von der Maschine M stammende Sensorsignal SS1 ähnliche zeitliche Abhängigkeiten aufweist wie die Zeitreihen des zum Training des Maschinenlernmoduls NN verwendeten Sensorsignals SS. Dementsprechend wird das Prüfmodul CK in diesem Fall keine signifikanten Abweichungen der Vorhersagen des Maschinenlernmoduls NN detektieren und einen Normalbetrieb des Softwarecontainers SC anzeigen. Infolgedessen wird das Steuersignal CS zum Steuern der Maschine M ausgegeben.

Im Unterschied dazu kann bei Einspeisung des Abtastsignals SCS davon ausgegangen werden, dass signifikante Abweichungen der Vorhersagen des Maschinenlernmoduls NN auftreten. Infolgedessen wird vom Prüfmodul CK das Alarmsignal A beispielsweise an einen Alarmgeber AL eines Erstellers des Maschinenlernmoduls NN und/oder des Steuerungsagenten POL ausgegeben.

## Patentansprüche

1. Computerimplementiertes Verfahren zum Diebstahlschutz eines zur Prädiktion von Sensorsignalen vorgesehenen Maschinenlernmoduls (NN), wobei
a) das Maschinenlernmodul (NN) darauf trainiert wird, anhand einer Zeitreihe eines Sensorsignals (SS) einen späteren Signalwert (SS(T+1)) des Sensorsignals (SS) als erstes Ausgabesignal (SSP) zu prädizieren sowie eine Streubreite des prädizierten späteren Signalwerts (SS(T+1)) als zweites Ausgabesignal (VAR) auszugeben,
b) das Maschinenlernmodul (NN) um ein Prüfmodul (CK) erweitert wird,
c) das erweiterte Maschinenlernmodul (NN) zu einem Anwender übermittelt wird,
d) ein Eingabesignal (IS, SS1, SCS) in das übermittelte Maschinenlernmodul (NN) eingespeist wird,
e) aus dem Eingabesignal (IS, SS1, SCS) durch das übermittelte Maschinenlernmodul (NN) ein erstes Ausgabesignal (SSP) und ein zweites Ausgabesignal (VAR) abgeleitet werden,
f) durch das Prüfmodul (CK) geprüft wird, ob ein späterer Signalwert (IS(T+1)) des Eingabesignals (IS, SS1, SCS) außerhalb einer durch das zweite Ausgabesignal (VAR) angegebenen Streubreite um einen durch das erste Ausgabesignal (SSP) angegebenen Signalwert liegt, und
g) abhängig vom Prüfungsergebnis ein Alarmsignal (A) ausgegeben wird.

2. Verfahren nach Anspruch 1, **dadurch gekennzeichnet, dass** das Maschinenlernmodul (NN) darauf trainiert wird, durch die als zweites Ausgabesignal (VAR) ausgegebene Streubreite eine tatsächliche Streubreite des tatsächlichen späteren Signalwerts (SS(T+1)) des Sensorsignals (SS) zu reproduzieren.

3. Verfahren nach Anspruch 2, **dadurch gekennzeichnet, dass** beim Training eine log-likelihood-Fehlerfunktion der Streubreite als Kostenfunktion verwendet wird, um die tatsächliche Streubreite des tatsächlichen späteren Signalwerts (SS(T+1)) des Sensorsignals (SS) zu reproduzieren.

4. Verfahren nach Anspruch 2 oder 3, **dadurch gekennzeichnet, dass** das Maschinenlernmodul (NN) ein bayessches neuronales Netz umfasst, das darauf trainiert wird, die tatsächliche Streubreite des tatsächlichen späteren Signalwerts (SS(T+1)) des Sensorsignals (SS) zu reproduzieren.

5. Verfahren nach einem der vorhergehenden Ansprüche, **dadurch gekennzeichnet,**
- **dass** ein Steuerungsagent (POL) zum Steuern einer Maschine (M) bereitgestellt wird, der anhand eines Sensorsignals (SS) der Maschine (M) ein Steuersignal (CS) zum Steuern der Maschine (M) erzeugt,
- **dass** das vom Steuerungsagenten (CTL) anhand des Sensorsignals (SS) der Maschine (M) erzeugte Steuersignal (CS) beim Training des Maschinenlernmoduls (NN) berücksichtigt wird,
- **dass** das Eingabesignal (IS, SS1, SCS) in den Steuerungsagenten (POL) eingespeist wird,
- **dass** das vom Steuerungsagenten (POL) anhand des Eingabesignals (IS, SS1, SCS) erzeugte Steuersignal (CS) in das übermittelte Maschinenlernmodul (NN) eingespeist wird, und
- **dass** das erste Ausgabesignal (SSP) und das zweite Ausgabesignal (VAR) des übermittelten Maschinenlernmoduls (NN) abhängig vom Steuersignal (CS) erzeugt werden.

6. Verfahren nach einem der vorhergehenden Ansprüche, **dadurch gekennzeichnet,**
- **dass** die Prüfung durch das Prüfmodul (CK) für eine Vielzahl von späteren Signalwerten (IS(T+1)) des Eingabesignals (IS, SS1, SCS) durchgeführt wird,
- **dass** eine Anzahl und/oder ein Anteil von außerhalb der durch das zweite Ausgabesignal (VAR) jeweils angegebenen Streubreite liegenden späteren Signalwerten (IS(T+1)) ermittelt wird, und
- **dass** das Alarmsignal (A) abhängig von der ermittelten Anzahl und/oder dem ermittelten Anteil ausgegeben wird.

7. Verfahren nach einem der vorhergehenden Ansprüche, **dadurch gekennzeichnet,**
**dass** das Maschinenlernmodul (NN) und das Prüfmodul (CK) in einem Softwarecontainer (SC) gekapselt werden.

8. Schutzsystem zum Diebstahlsschutz eines zur Prädiktion von Sensorsignalen vorgesehenen Maschinenlernmoduls (NN), eingerichtet zum Ausführen aller Verfahrensschritte eines Verfahrens nach einem der vorhergehenden Ansprüche.

9. Computerprogrammprodukt eingerichtet zum Ausführen eines Verfahrens nach einem der Ansprüche 1 bis 7.

10. Computerlesbares Speichermedium mit einem Computerprogrammprodukt nach Anspruch 9.
Zusammenfassung
